# EUROPÄISCHE PATENTSCHRIFT

(11) **EP 0 636 462 B1**
(45) Veröffentlichungstag und Bekanntmachung des Hinweises auf die Patenterteilung: **02.01.1997**
(21) Anmeldenummer: 94109431.0
(22) Anmeldetag: 17.06.1994
(51) Int. Cl.: B29C 33/36, B29C 49/38

(54) **Vorrichtung zum Herstellen von Wellrohren aus thermoplastischem Kunststoff**
Device for manufacturing of corrugated tubes from thermoplastic material
Dispositif pour la fabrication de tubes ondulés en matière thermoplastique

(30) Priorität: 26.07.1993 DE 9311140 U
(43) Veröffentlichungstag der Anmeldung: 01.02.1995
(73) Patentinhaber: Drossbach GmbH & Co. KG, D-86639 Rain am Lech (DE)
(72) Erfinder: Dietrich, Karl, D-86641 Rain am Lech (DE); Drossbach, Hubert M., Dipl.-Ing., (verstorben) (DE); Hurler, Michael, D-86703 Rögling (DE)
(74) Vertreter: Gossel, Hans K., Dipl.-Ing.

(56) Entgegenhaltungen:
- EP-A- 0 270 694
- DE-A- 1 918 336
- FR-A- 2 295 827
- US-A- 3 543 342
- US-A- 4 365 948

## Beschreibung

Die Erfindung betrifft eine Vorrichtung zum Herstellen von Weilrohren aus thermoplastischem Kunststoff mit einer im Anschluß an einen Spritzkopf eines Extruders angeordneten Formstrecke, die aus einer in einem Gestell angeordneten Führung besteht, auf der in einem Einlauf paarweise zu ringförmigen Formen geschlossene Formhälften dicht aufeinanderfolgend vorgeschoben werden, die auf ihrer Unterseite mit Zahnstangen versehen sind, mit mindestens einem im Anfangsbereich der Formstrecke angeordneten Antriebsritzel, das mit den Zahnstangen der zusammengeschobenen Formhälften kämmt, und mit einem der Formstrecke folgenden Auslauf, in dem die Formhälften voneinander getrennt und an voneinander getrennte Rücklaufstrecken übergeben werden, auf denen sie durch Fördermittel zu dem Einlauf zurückgeführt werden.

Zum Herstellen von Wellrohren, bei denen es sich um Kunststoffrohre mit Querprofilierung, insbesondere mit ring- oder schraubenlinienförmigen Querwellen handelt, ist es bekannt, an zwei endlosen, umlaufenden Ketten Formhälften zu befestigen, die im Anschluß an einen Spritzkopf eines Extruders in der Formstrecke zu zwei zueinander parallelen Reihen in der Weise zusammengeführt werden, daß die Formhälften jeder Reihe paarweise dicht aneinanderliegende Hohlformen bilden. Diese bekannten Vorrichtungen sind zur Herstellung von Wellrohren kleinerer Durchmesser geeignet, da es bei diesen in Kauf genommen werden kann, daß auch in den Rücklaufstrecken die Formhälften dicht aufeinanderfolgend gefördert werden.

Sollen jedoch Wellrohre mit größeren Durchmessern hergestellt werden, werden entsprechend größer dimensionierte Formhälften benötigt, deren Herstellung aufwendig ist und die daher einen erheblichen Investitionsaufwand bedeuten. Um mit der geringstmöglichen Anzahl von Formhälften auszukommen, sind daher Vorrichtungen bekannt, bei denen die Formhälften nur in der Formstrecke zu dicht aneinanderliegenden Folgen zusammengeführt sind, während sie einzeln mit größerer Geschwindigkeit über die Rücklaufstrecken zurückgefördert werden, so daß es grundsätzlich nur notwendig ist, jeweils in jeder Rücklaufstrecke nur eine Formhälfte zu fördern, und sich dadurch die zur Herstellung von Wellrohren erforderliche Anzahl von Formhälften auf ein Minimum beschränkt.

Bei einer aus EP-B-0 270 694 bekannten Vorrichtung der eingangs angegebenen Art besteht die die Formhälften über die Rücklaufstrecken zurückführende Rückführeinrichtung aus zwei längs der Form- oder Arbeitsstrecke im Abstand von dieser verlaufenden Rückförderern und vier Querförderern, die die Formhälften zwischen den Ein- und Ausläufen einerseits und den Rücklaufstrecken andererseits in Querrichtung fördern. Jeder der Rückförderer besitzt jeweils unterhalb des Formhälftenweges ein endloses Zugglied mit einem in Förderrichtung des jeweiligen Förderers umlaufenden Trum. Dabei tragen die Zugglieder Mitnehmer, die am Beginn des Förderweges mit den Formhälften in Eingriff kommen, diese mitnehmen und am Ende der Rücklaufstrecke wieder außer Eingriff mit den Formhälften kommen. Während bei dieser bekannten Vorrichtung der Rücktransport der Formhälften über die Rücklaufstrecke problemlos möglich ist, ergeben sich jedoch gewisse Schwierigkeiten bei der Querförderung der Formhälften durch die Querförderer, da diese ein verkantungs- und stoßfreies Aneinanderfügen der Formhälften in dem Einlauf und ein entsprechendes behinderungsfreies Auseinanderführen der Formhälften im Auslauf bewirken müssen.

Bei einer aus EP-B-0 007 556 bekannten Vorrichtung der eingangs angegebenen Art wird das Problem des verkantungs- und anstoßfreien Anlegens der Formhälften im Einlauf der Formstrecke und des störungsfreien Herausziehens der Formhälften im Auslauf der Arbeitsstrecke dadurch gelöst, daß jede Rückführeinrichtung der Formhälften aus einem Schlitten mit einem Schwenkarm besteht, der an seinem freien Ende ein Koppelorgan zur lösbaren Ankoppelung an eine Formhälfte besitzt. Durch entsprechende Steuerung der Schwenkbewegung der Schwenkarme läßt sich der translatorischen Schlittenbewegung eine Schwenkbewegung in der Weise überlagern, daß die Formhälften beim Einfügen im Einlauf in die Formstrecke und beim Herausführen im Auslauf der Formstrecke auf gewünschten schrägen und gekrümmten Kurvenbahnen geführt werden können. Diese bekannte Vorrichtung weist jedoch den Nachteil auf, daß die Schlitten- und Schwenkarmkonstruktion wegen der benötigten Stabilität sehr aufwendig ist und daß die Rückförderung über die Rücklaufstrecke nur durch einen Schlitten möglich ist, der nach jedem Förderweg einen Rücklaufweg ausführen muß, so daß die Rückfördergeschwindigkeit begrenzt ist und sich jeweils immer nur eine Formbackenhälfte in der Rücklaufstrecke befinden kann.

Aufgabe der Erfindung ist es daher, eine Vorrichtung der eingangs angegebenen Art zu schaffen, deren Rücklaufstrecken mit kontinuierlich fördernden Fördereinrichtungen versehen sind, wobei zwischen der Formstrecke und den Rücklaufstrecken quer fördernde Einrichtungen vorgesehen sind, die ein kollisionsfreies Einfädeln der Formhälften in dem Einlauf und ein entsprechendes stoßfreies Herausziehen der Formhälften im Auslauf der Formstrecke ermöglichen.

Erfindungsgemäß wird diese Aufgabe bei einer Vorrichtung der gattungsgemäßen Art dadurch gelöst, daß die Fördermittel aus aufeinanderfolgend mit den Zahnstangen der Formhälften in Eingriff kommenden, angetriebenen Ritzeln bestehen und daß die Querförderung der Formhälften zwischen dem Aus- und Einlauf durch querbeweglich angetriebene Ritzel erfolgt. Bei der erfindungsgemäßen Vorrichtung findet einheitlich eine Förderung und Bewegung der Formbackenhälften nur durch Ritzel statt, so daß die Ritzelförderung nicht nur auf den Vorschub der Formbacken in der Formstrecke beschränkt ist, sondern auch zur Rückförderung der Formbackenhälften in den Rücklaufstrecken angewendet wird. Bei der erfindungsgemäßen Vorrichtung findet also zwischen dem Auslauf und dem Ritzelantrieb im Einlauf der Formstrecke eine Förderung der Formbackenhälften durch Ritzel statt, so daß nur einheitliche Fördermittel zur Anwendung kommen, die eine Förderung der Formbackenhälften auf den gewünschten Förderwegen in genau definierter Weise ermöglichen.

Im Auslaufbereich der Förderstrecke geraten die Zahnstangen der Formhälften jeweils in genau definiertem Zahneingriff mit den Querförderritzeln, die die Formbackenhälften einmal mit der synchronen Geschwindigkeit der Formstrecke weiterfördern und anschließend oder gleichzeitig die Formhälften zum Ausheben aus der Formstrecke querfördern. Dabei können die Querförderritzel den herauszuführenden Formbackenhälften kurzfristig auch eine größere Geschwindigkeit als der Sychrongeschwindigkeit erteilen, um zur erleichterten Querförderung einen kleinen Spalt zu den nachfolgenden Formhälften zu bilden, der ein kollisionsfreies Ausfahren mit Sicherheit gewährleistet.

Das Einfügen der Formbackenhälften im Einlaufbereich der Formstrecke erfolgt dann in entsprechender Weise.

Nachdem also die Querförderritzel die Formhälften zunächst mit Sychrongeschwindigkeit der Formstrecke und vorzugsweise vorübergehend mit einer größeren Geschwindigkeit gefördert haben, wird der Förderbewegung in Arbeitsrichtung eine Querförderbewegung überlagert. Anschließend wird der Ritzelantrieb reversiert, so daß die jeweilige Formhälfte in der Rücklaufstrecke mit richtigem Zahneingriff an die Ritzel der Rücklaufstrecke übergeben wird. Die Ritzel der Rücklaufstrecke beschleunigen dann die Formhälften zunächst auf die größte Rückfördergeschwindigkeit, bevor diese die Formhälften zur Übergabe an die Querförderritzel wieder abbremsen.

In weiterer Ausgestaltung der Erfindung ist vorgesehen, daß die in den Ein- und Auslaufbereichen der Formstrecke jeweils in die Verzahnungen der Zannstangen der Formhälften eingreifenden, antreibbaren Ritzel mit ihren Stirnseiten oder mit mit den Stirnseiten verbundenen Bordscheiben formschlüssig an die Zahnstangen einfassenden Flanken anliegen und daß die Ritzel mit diese querfördernden Antrieben versehen sind. Die also sowohl drehend als auch in axialer Richtung antreibbaren Ritzel vermögen den Formbackenhälften Bewegungen sowohl in Richtung der Formstrecke als auch quer zu dieser zu erteilen, so daß sie die Formbackenhälften auf den gewünschten Bewegungsbahnen sowohl aus der Formstrecke heraus als auch in diese hinein zu fördern vermögen.

Sind die Stirnseiten der Ritzel mit Bordscheiben versehen, bewirken diese die erforderliche Kraftübertragung zur Querförderung der Formhälften.

Zweckmäßigerweise weisen die Bordscheiben einen größeren Durchmesser auf als die Ritzel, so daß diese bei der Querförderung in der gewünschten Weise großflächig an den die Zannstangen einfassenden Flanken anliegen.

Zweckmäßigerweise ist für jede Folge von Formhälften in der Formstrecke je ein Antriebsritzel vorgesehen. Diese synchron angetriebenen Antriebsritzel sind dann in funktioneller Weise den Querförderritzeln in der Weise angepaßt, daß sie bei der Übergabe der Formhälften an diese durch die Querförderritzel mit diesen fluchten.

Grundsätzlich kann den Querförderritzeln durch entsprechendes Verfahren der Ritzelwellen in axialer Richtung eine querfördernde Bewegung erteilt werden. Vorteilhafter ist es jedoch, jedes der querfördernden Ritzel in einem in Führungen verfahrbaren Schlitten zu lagern, der mit einem diesem bewegenden Antrieb versehen ist. Dabei kann jedes in dem Schlitten gelagerte Ritzel auf einer gestellfest gelagerten, mit einem Antrieb versehenen Vielkeilwelle verschieblich gelagert sein, so daS das Ritzel in einfacher Weise mit einem Drehantrieb versehen ist. Der Schlitten selbst kann in beliebiger Weise mit einem diesen quer verfahrenden Antrieb versehen sein. Zweckmäßigerweise ist jeder Schlitten jedoch durch eine gestellfest gelagerte und mit einem Antrieb versehene Spindel verfahrbar.

Zweckmäßigerweise sind die Formhälften auf ihren Ober- und Unterseiten mit Zahnstangen versehen, wobei im Anfangsbereich der Formstrecke auch mit den oberen Zahnstangen kämmende Antriebsritzel vorgesehen sind. Diese Art des Antriebs sichert eine gute, gleichmäßige und verkantungsfreie Förderung der Formbackenhälften in der Formstrecke.

Zweckmäßigerweise sind die Formhälften mit schrägen Führungsflächen versehen, die im Auslaufbereich der Formstrecke mit entsprechenden schrägen Führungsflächen des Gestells zusammenwirken. Diese Schrägflächen bewirken ein gutes Ausheben der Formstege der Formhälften aus den Wellentälern der Wellrohre.

Zweckmäßigerweise stützen sich die Formhälften in der Formstrecke über Rollen an seitlichen Führungsprofilen ab. Während die Formhälften in der Formstrecke durch die Antriebsritzel in ihrer axialen Richtung genau zueinander ausgerichtet sind, bewirken die seitlichen Führungs- oder Abstützprofile einen guten Verbund der paarweise die Formstrecke durchlaufenden Formhälften zu einem ringförmigen Glied der wandernden Form.

Zweckmäßigerweise sind die Formhälften auf ihrer Oberseite mit Rollen oder frei drehbar gelagerten Kugeln versehen, die mit oberen Führungen oder Führungsflächen des Gestells zusammenwirken können. Damit können sich die Formhälften über die Rollen oder Kugeln an den Führungsflächen abstützen, so daß eine unerwünschte Verlagerung der Formhälften ausgeschlossen ist.

Zweckmäßigerweise stehen die Ritzel jeder der beiden Rücklaufstrecken miteinander in Antriebsverbindung und werden von einem gemeinsamen Antrieb synchron angetrieben.

Nach einer Weiterbildung der Erfindung ist vorgesehen, daß im Endbereich der Formstrecke mit den Zahnstangen jeder Folge von Formhälften kämmende Ritzel angeordnet sind, deren Wellen mit die Stellung der Zähne erfassenden Meßeinrichtungen versehen sind. Durch die Erwärmung der Formhälften in der Formstrecke durch den extrudierten Rohrstrang erfahren die Formhälften eine Längung, die zum zahnrichtigen Eingriff der Querförderritzel in die Zahnstangen der Formhälften erfaßt werden muß. Diese Längung der Formhälften wird durch die Meßritzel gemessen, so daß eine entsprechende Steuereinrichtung dann die Drehung und Winkelstellung der Querförderritzel zum lagerichtigen Zahneingriff sicherstellt.

In entsprechender Weise kann der obere Teil des Gestells entsprechend den Dehnungen und Schrumpfungen der Formhälften heb- und absenkbar sein.

Nach einer Weiterentwicklung der Erfindung ist vorgesehen, daß die Rücklaufstrecken anschließend an die Querförderritzel mit Parkstation für Formhälften versehen sind, die durch eigene Antriebe in die Rücklaufstrecken einführbar sind. Die an den Parkstationen stehenden Formhälften können besondere Formen aufweisen, so daß durch entsprechendes paarweises Einleiten der in den Parkstationen stehenden Formhälften besondere Formen an den Rohren, beispielsweise Muffen, erzeugt werden können. Haben die mit besonderen Formen versehenen Formhälften die Formstrecke durchlaufen, werden diese wieder durch entsprechenden Antrieb der Querförderritzel in den Parkstationen abgestellt.

Zweckmäßigerweise besteht das Gestell aus zwei in der vertikalen Längsmittelebene geteilten Teilen, die auseinanderfahrbar und in ihrer zusammengeschobenen Stellung verriegelbar sind. Diese Ausgestaltung ermöglicht es, im Falle von Störungen, beispielsweise bei Stromausfall, die Gestellteile jeweils mit einer Folge der Formhälften in der Arbeitsstrecke auseinanderzufahren, so daß die Formhälften von dem extrudierten Rohr abgehoben werden und ein Einfrieren des Rohres in den Formen in der Formstrecke vermieden ist.

Das Gestell kann auch in seiner Längsrichtung durch Antriebe auf Führungen verschieblich sein.

Ein Ausführungsbeispiel der Erfindung wird nachstehend anhand der Zeichnung näher erläutert. In dieser zeigt
- Fig. 1: eine Draufsicht auf die Vorrichtung zum Transport der Formhälften,

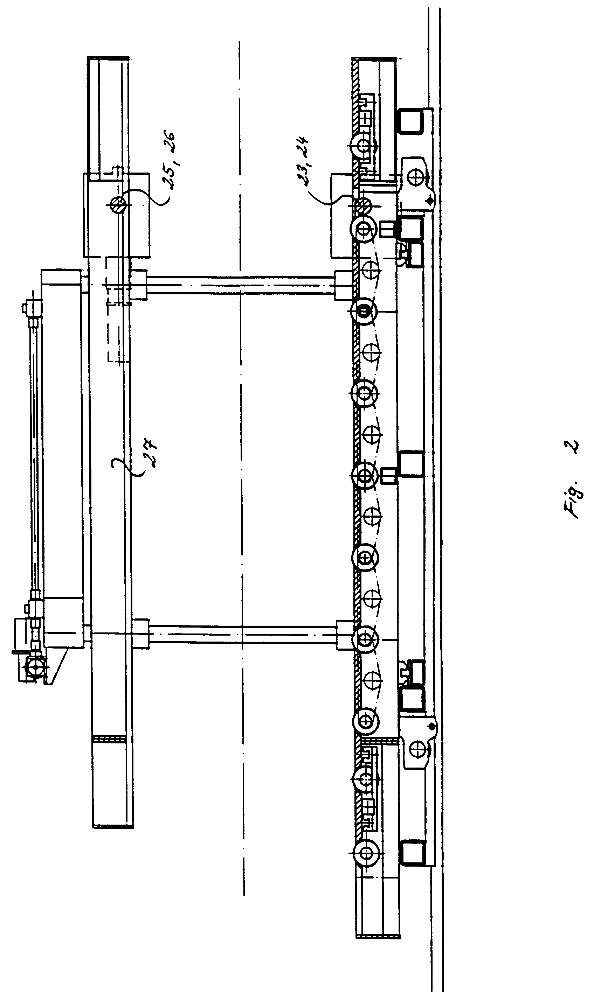

- Fig. 2: einen Längsschnitt durch die Vorrichtung nach Fig. 1,

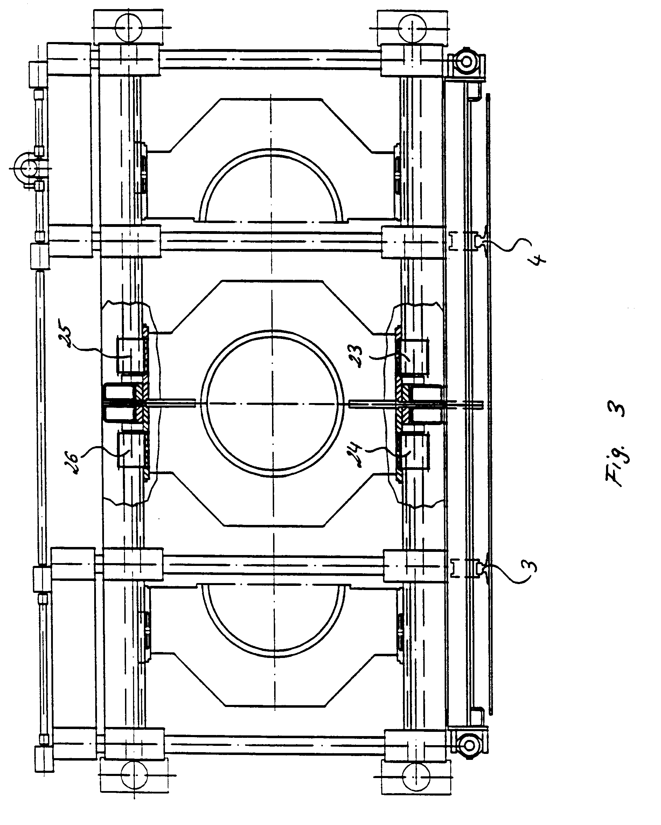

- Fig. 3: einen Querschnitt durch die Vorrichtung nach Fig. 1,
- Fig. 4: eine Draufsicht auf den Grundrahmen der Vorrichtung nach Fig. 1,
- Fig. 5: einen weiteren Querschnitt durch die Vorrichtung nach Fig. 1,
- Fig. 6: einen der Fig. 5 entsprechenden Querschnitt mit auseinandergeschobenen Rahmenteilen,
- Fig. 7: eine Draufsicht auf ein in einem Schlitten gelagertes Querförderritzel mit Verstellspindel und Ritzelantrieb,

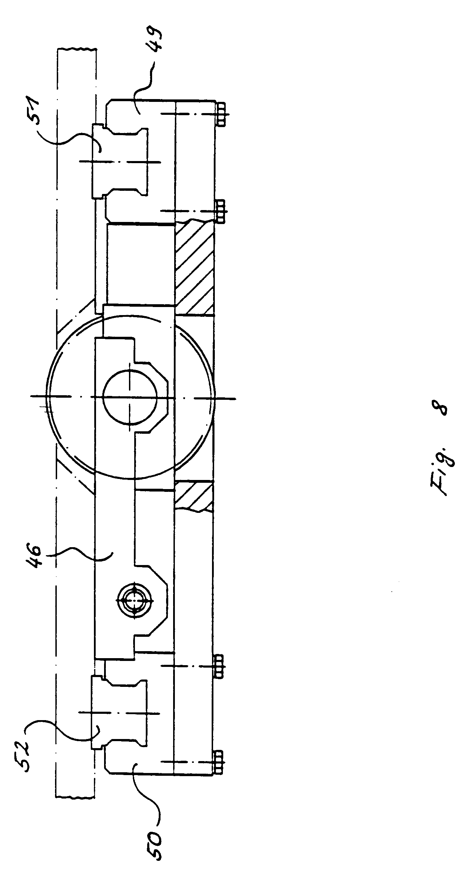

- Fig. 8: eine Ansicht des das Querförderritzel lagernden Schlittens in Richtung des Pfeils Z in Fig. 7,
- Fig. 9: eine Draufsicht auf eine Formhälfte,

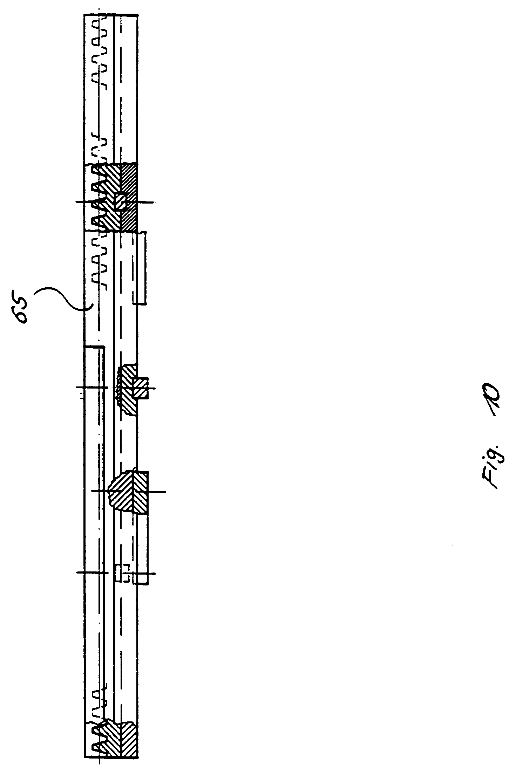

- Fig. 10: eine Seitenansicht der oberen seitlichen Formbackenbegrenzungsplatte, teilweise im Schnitt,
- Fig. 11: einen Schnitt durch die Formbackenplatten längs der Linie XI-XI in Fig. 9,
- Fig. 12: eine schematische Draufsicht auf die Vorrichtung nach Fig. 1,

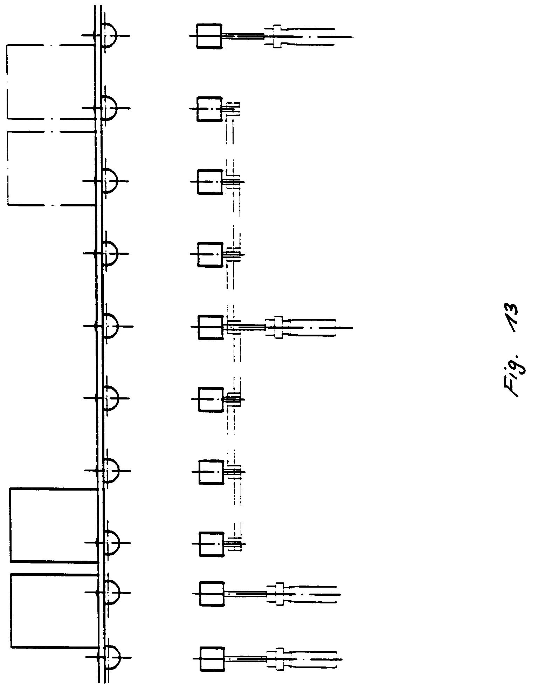

- Fig. 13: ein Antriebsschema der Ritzeln einer Rückförderstrecke,
- Fig. 14a - Fig. 14p: eine zeitliche Folge des Transports zweier Formbacken von dem Auslauf zurück in den Einlauf,
- Fig. 15a - Fig. 15p: eine zeitliche Folge des Formbackentransports von dem Auslauf zurück in den Einlauf, bei dem in der Parkstation abgestellte Formhälften in die Rücklaufstrecken eingespeist werden, und
- Fig. 16a - Fig. 16b: die Rückführung eines Formbackenpaares in die Parkstation.

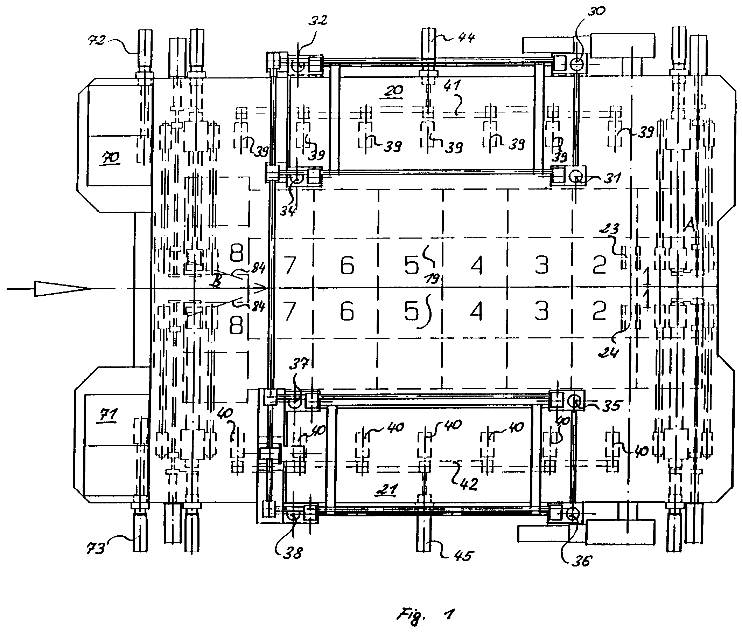

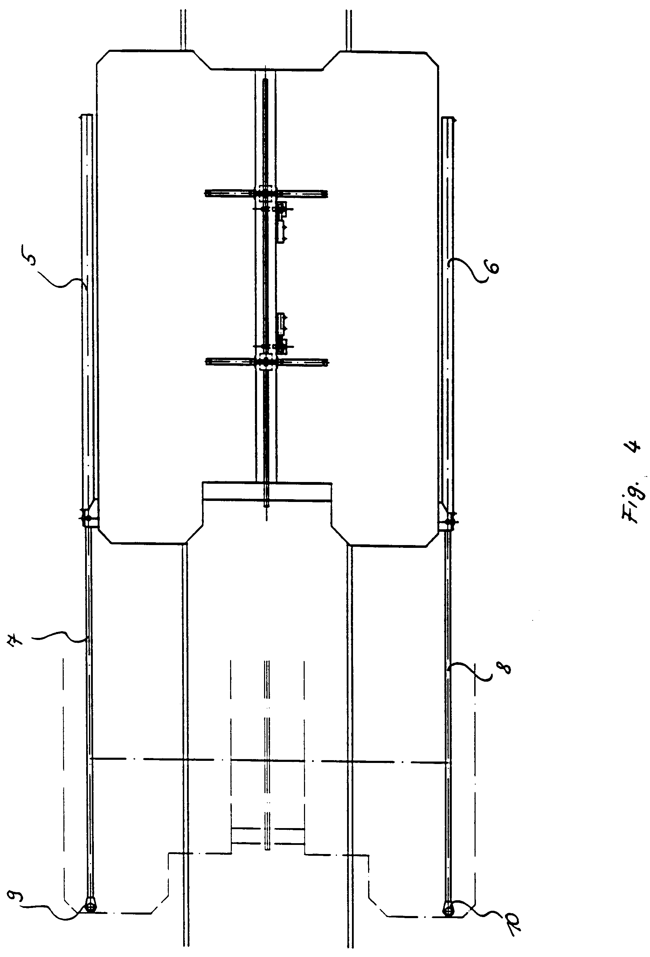

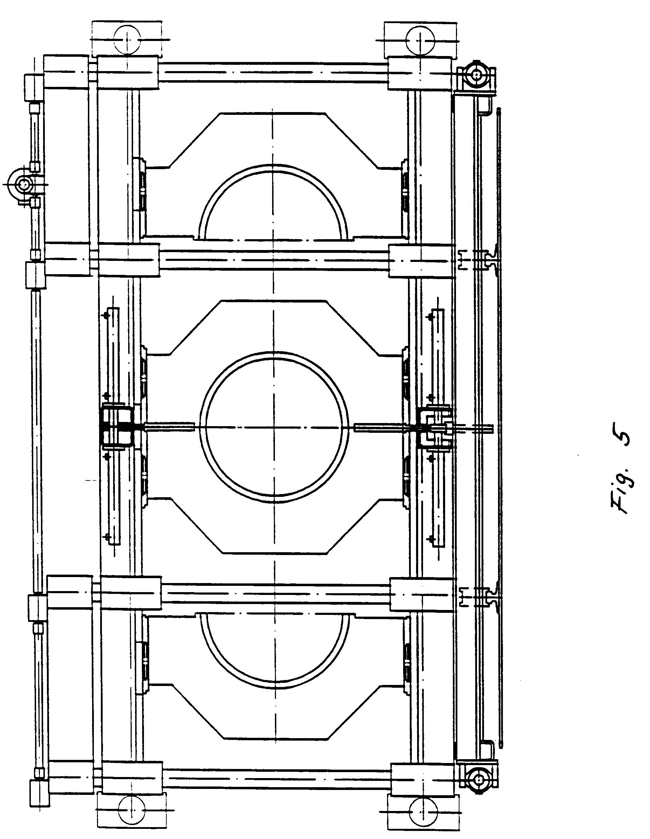

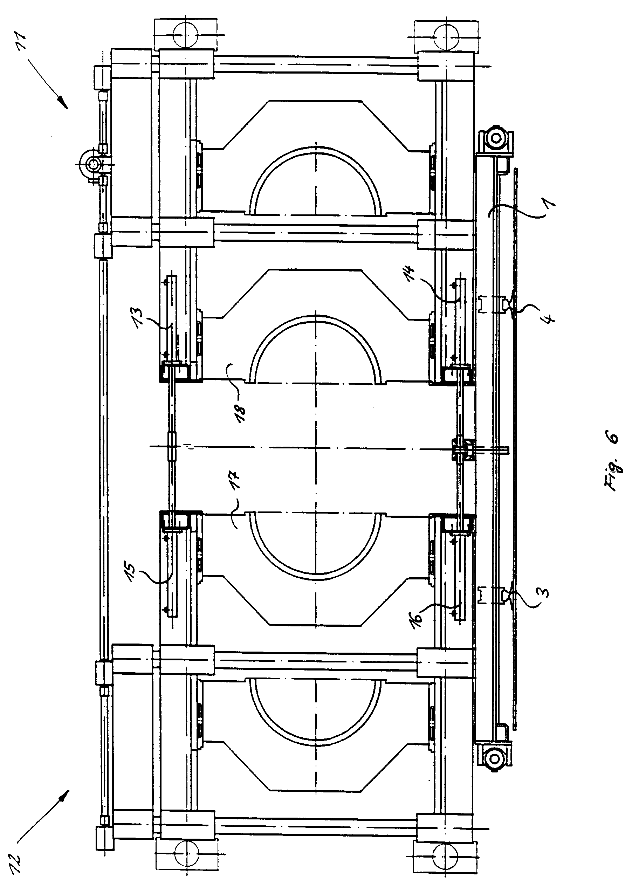

Wie am besten aus den Figuren 4 bis 6 ersichtlich ist, besteht die Vorrichtung aus einem Grundrahmen 1, der auf zwei parallel zur Formstrecke verlaufenden Schienen 3, 4 verschieblich geführt ist. Zur Verschiebung in Längsrichtung dienen seitlich an dem Grundrahmen 1 befestigte Hydraulikzylinder 5, 6, deren Kolbenstangen 7, 8 an Festpunkten 9, 10 angelenkt sind. Auf dem Grundrahmen 1 sind die Rahmenteile 11, 12 querverschieblich geführt, wobei zur Querverschiebung hydraulische Kolben-Zylinder-Einheiten 13 bis 16 vorgesehen sind. In der aus den Figuren 4 und 5 zusammengeschobenen Stellung der Rahmenteile 11, 12 sind diese miteinander verriegelt. Die Rahmenteile 11, 12 sind jeweils mit zwei parallel zueinander verlaufenden Führungen für die linken und rechten Formhälften 17, 18 versehen, auf denen diese durch die Arbeits- oder Formstrecke 19 und über die Rücklaufstrecken 20, 21 geführt werden. In der aus Fig. 1 ersichtlichen Formstrecke 19 befinden sich jeweils acht zu ringförmigen Formen zusammengeschobene Formhälften 17, 18, wobei jeweils die Formhälften eines Paares in der Auslaufstation B auseinandergeführt oder in der Einlaufstation A zusammengeführt werden. Durch die Formstrecke 19 werden die zu ringförmigen Formen zusammengeschobenen Formhälften jeweils durch paarweise an den oberen und unteren Zahnstangen der Formhälften angreifende Ritzel 23, 24 und 25, 26 transportiert. Die Ritzel 23, 24 sind in den Grundrahmenteilen gelagert, während die Ritzel 25, 26 in Rahmen 27, 28 gelagert sind, die an jeweils vier Säulen 30 bis 34 und 35 bis 38 heb- und absenkbar geführt sind. Über die Rücklaufstrecken 20, 21 transportieren jeweils sieben Ritzel 39, 40 die Formbackenhälften, die mit gleicher Drehrichtung synchron durch Ketten oder Zahnriemen 41, 42 gekuppelt sind. Die Ritzel 39, 40 der beiden Rücklaufstrecken 20, 21 werden jeweils von einem gemeinsamen Antrieb 44, 45 angetrieben.

Zur Querförderung der Formhälften 17, 18 zwischen der Formstrecke 19 und den Rücklaufstrecken 20, 21 sind in Schlitten 46 gelagerte Querförderritzel 47 vorgesehen, die an ihren Stirnseiten mit im Durchmesser größeren Bordscheiben 48 verbunden sind. Die Schlitten 46 sind mit Führungsstücken 49, 50 verschraubt, die auf parallel zueinander verlaufenden Führungsschienen 51, 52 jedes der Gestellteile querverschieblich geführt sind.

Die die Ritzel 47 lagernden Zapfen 53 sind als Hohlzapfen ausgeführt, die auf im Gestell gelagerten Vielkeilwellen 54 axialverschieblich gelagert sind. Die Vielkeilwellen sind jeweils mit besonderen Antriebs-Servo-Motoren 55 gekuppelt.

Auf den Schlitten 46 sind Spindelmuttern 56 befestigt, die von in jedem der Gestellteile gelagerten Spindeln 57 durchsetzt sind, die ebenfalls mit eigenen Antriebs-Servo-Motoren 58 gekuppelt sind.

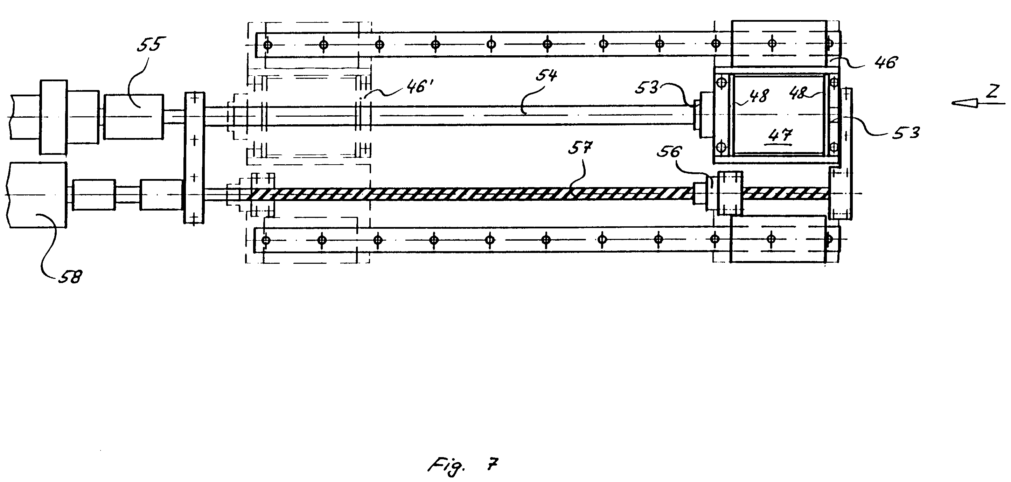

In Fig. 7 ist der Schlitten 46 in voll ausgezogenen Linien in seiner Stellung gezeigt, in der er sich zur Übergabe einer Formhälfte in die Formstrecke befindet. Links in Fig. 7 ist der Schlitten 46' in gestrichelter Stellung dargestellt, in der er die über die entsprechende Rücklaufstrecke geförderte Formhälfte übernimmt.

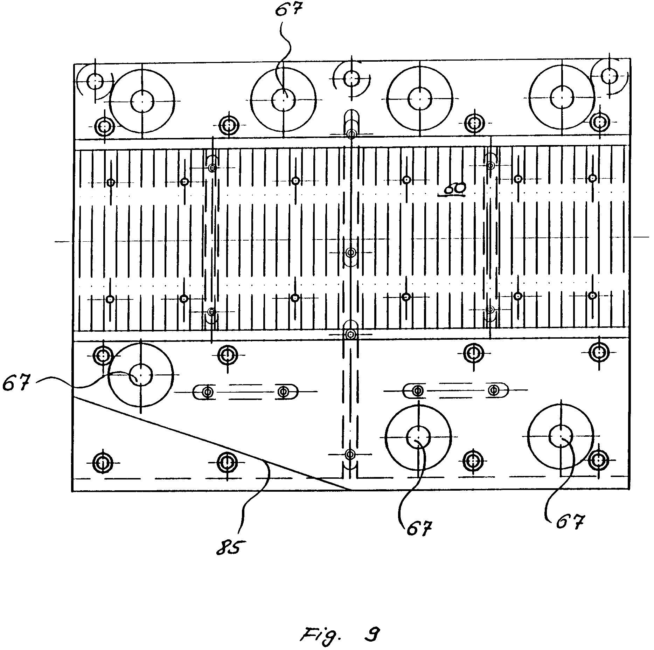

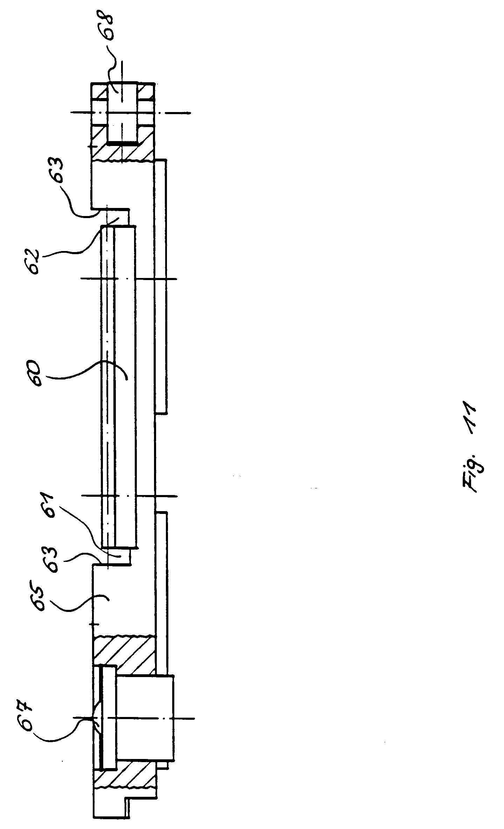

Jede der spiegelbildlich zueinander ausgebildeten Formhälften 17, 18 trägt auf ihrer Oberseite und ihrer Unterseite eine Zahnstange 60, die mit den Ritzeln kämmt. Beidseits der Zahnstangen 60 sind in der aus Fig. 11 ersichtlichen Weise Nuten 61, 62 vorgesehen, deren jeweils äußere Flanken 63 der Führung der mit den Stirnseiten der Ritzel 47 verbundenen Bordscheiben 48 dienen. Die Zahnstangen 60 sind mit Stahlplatten 65 verschraubt, die die Oberseiten und Unterseiten der Formhälften 17, 18 abdecken. Seitlich der Zahnstangen 60 sind in den Stahlplatten 65 in der aus den Figuren 9 und 11 ersichtlichen Weise Kugeln 67 über kleine Kugeln in kalottenartigen Betten gelagert, die der reibungsarmen Führung der Formhälften 17, 18 durch die Formstrecke und die Rücklaufstrecken dienen. Die Stahlplatten 65 tragen an ihren äußeren Seiten Rollen 68, über die sich diese in der Formstrecke auf seitlichen Führungsschienen abstützen.

Die Gestellteile sind im Bereich des Auslaufs mit keilförmigen Schrägflächen 84 (siehe Fig. 1) versehen, die mit entsprechenden Schrägflächen 85 (siehe Fig. 9) der Formhälften zusammenwirken, so daß der Bewegung der Formhälften in Richtung der Arbeitsstrecke eine Querbewegung überlagert wird, mit der die Formhälften bei ihrer Bewegung mit Synchrongeschwindigkeit der Arbeitsstrecke außer Eingriff mit den in der Arbeitsstrecke profilierten Wellrohren geschoben werden. Erst nachdem die Formhälften durch die Keilflächen 84, 85 eine Querverschiebung erfahren haben, geraten die Zahnstangen der quer verschobenen Formhälften in Eingriff mit den Querförderritzeln, die dann die Formhälften in die Rückführstrecken 20, 21 fördern.

Da die Formhälften 17, 18 aus Aluminiumgußteilen bestehen, sind die Stahlplatten in einer Weise mit den Formhälften verbunden, daß den unterschiedlichen Dehnungen von Aluminium und Stahl Rechnung getragen ist.

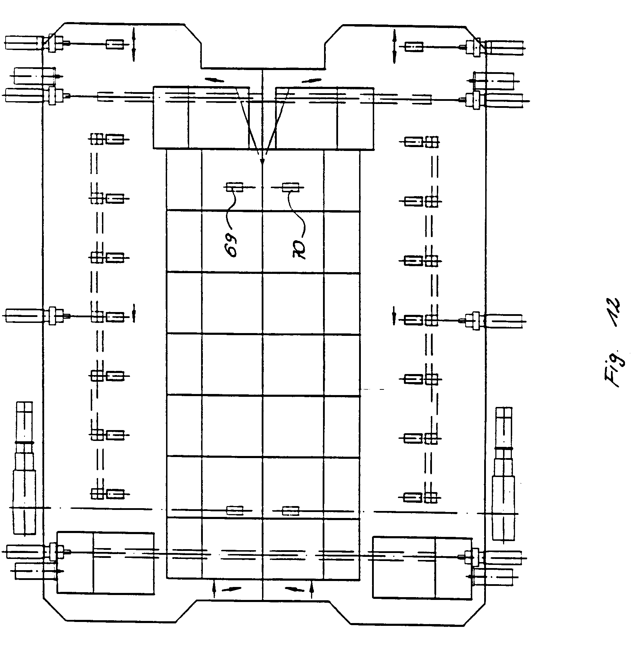

Wie aus Fig. 12 ersichtlich, sind im Endbereich der Formstrecke zwei Meßritzel 69, 70 im Gestell gelagert, die mit den Zahnstangen der beiden in der Formstrecken befindlichen Folgen von Formhälften kämmen. Diese Meßritzel 69, 70 erfassen die Dehnungen der Formhälften in der Formstrecke in Längsrichtung und geben diese über ihre Wellen an die Steuereinrichtung der Anlage weiter. Entsprechend den gemessenen Dehnungen korrigiert die Steuereinrichtung die Winkellage der Querförderritzel 47, so daß die Zahnstangen im Auslaufbereich lagerichtig in die Verzahnungen der Querförderritzel eingreifen.

In Verlängerung der Rücklaufstrecken 20, 21 befindet sich jenseits des Querförderweges der Schlitten 46 in den Rücklaufstrecken-Parkpositionen 70, 71, in denen Formhälften mit Sonderformen bereitgestellt werden können. Diese Parkstationen 70, 71 sind mit eigenen Antrieben 72, 73 für die geparkten Formhälften versehen, so daß diese nach Bedarf paarweise in die Rücklaufstrecken eingeleitet werden können.

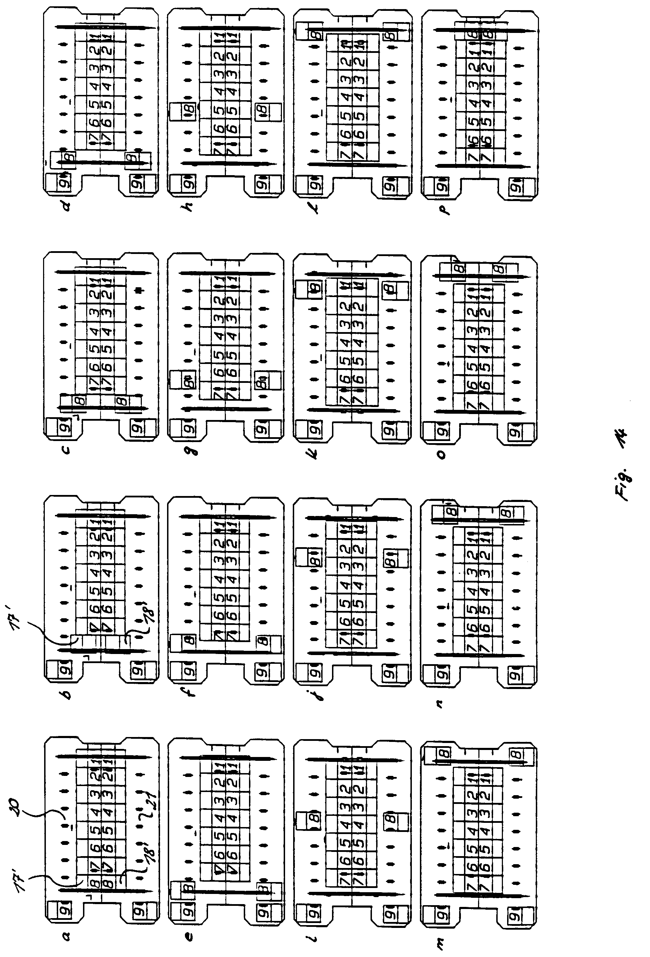

Aus Fig. 14 ist die zeitliche Folge ersichtlich, in der Formhälften 17', 18' im Auslauf in die Rücklaufstrecken 20, 21 überführt und im Einlauf wieder paarweise in der Formstrecke zusammengeführt werden. In Fig. 14a befinden sich die Formhälften 17, 18 am Ende der Formstrecke. Die Formhälften 17, 18 kommen in Eingriff mit den Querförderritzeln 47, die zunächst die Formbackenhälften mit synchroner Geschwindigkeit der Formstrecke weiterfördern und diesen dann eine geringe, voreilende Geschwindigkeit erteilen, sobald diese über die Schrägflächen so weit nach außen gefördert sind, daß die formenden Rippen außer Eingriff mit den geformten Wellentälern der Wellrohre gekommen sind. Sobald die Querförderritzel die Formhälften nach außen in die Rücklaufstrecken 20, 21 gefördert haben, reversieren deren Antriebe, so daß die Formhälften 17, 18 mit ihren Zahnstangen in Eingriff mit den Rückförderritzeln der Rücklaufstrecken 20, 21 kommen. Die Formbacken werden dann von den synchron angetriebenen Rückförderritzeln auf Rückfördergeschwindigkeit beschleunigt, bevor sie wieder abgebremst werden, wenn sie auf die Querförderritzel der Einlaufseite gelangen. Im Einlauf werden dann die Formhälften von den Querförderritzeln wieder zu ringförmig geschlossenen Formen zusammengeführt und an die vier Ritzel übergeben, die diese durch die Formstrecke fördern.

Der Transport der Formhälften 17', 18' von dem Auslauf zu dem Einlauf ist in Fig. 14 in 16 Schritten dargestellt, wobei jeder Schritt einer Sekunde in dem zeitlichen Ablauf entspricht.

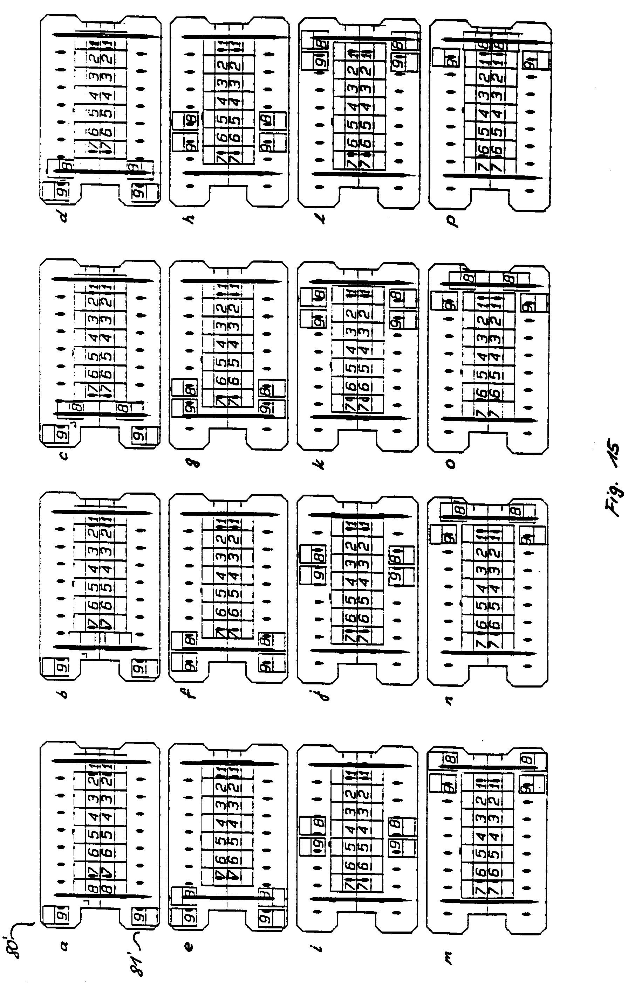

Aus den Figuren 15a bis 15p ist ersichtlich, wie in den Parkstationen geparkte Sondernformhälften 80' und 81' in die Rücklaufstrecken eingespeist und in der Formstrecke über die Querförderritzel zusammengeführt werden. Wie aus Fig. 15 ersichtlich ist, erfolgt die Steuerung der Anlage bei der Einführung der Sonderformhälften 80', 81' dadurch, daß diese über die Querförderritzel des Auslaufes transportiert werden, wenn sich diese in ihren Rückförderstrecken befinden.

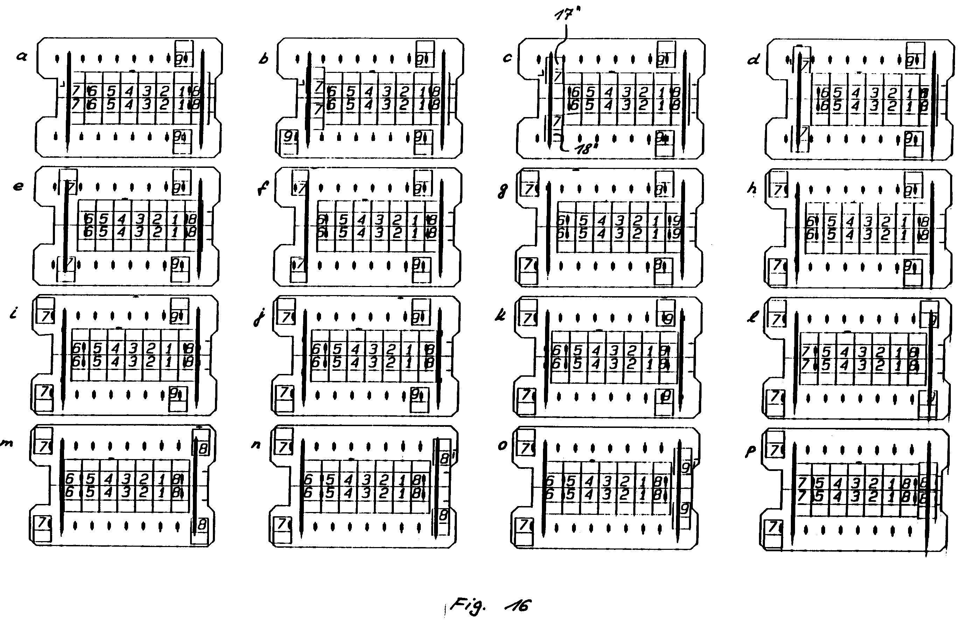

Aus Fig. 16 ist ersichtlich, wie die Formhälften 17'' und 18'' vorübergehend in den Parkstationen abgestellt werden, während die Sonderformhälften 80', 81' durch die Formstrecke geschoben werden.

## Patentansprüche

1. Vorrichtung zum Herstellen von Wellrohren aus thermoplastischem Kunststoff
mit einer im Anschluß an einen Spritzkopf eines Extruders angeordneten Formstrecke, die aus einer in einem Gestell angeordneten Führung besteht, auf der in einem Einlauf paarweise zu ringförmigen Formen geschlossene Formhälften dicht aufeinanderfolgend vorgeschoben werden, die auf ihrer Unterseite mit Zahnstangen versehen sind,
mit mindestens einem im Anfangsbereich der Formstrecke angeordneten Antriebsritzel, das mit den Zahnstangen der zusammengeschobenen Formhälften kämmt, und
mit einem der Formstrecke folgenden Auslauf, in dem die Formhälften voneinander getrennt und an voneinander getrennten Rücklaufstrecken übergeben werden, auf denen sie durch Fördermittel zu dem Einlauf zurückgeführt werden,
**dadurch gekennzeichnet**,
daß die Fördermittel der Rücklaufstrecken aus aufeinanderfolgend mit den Zahnstangen der Formhälften in Eingriff kommenden, angetriebenen Ritzeln bestehen und daß die Querförderung der Formhälften zwischen dem Aus- und Einlauf durch querbeweglich angetriebene Ritzel erfolgt.

2. Vorrichtung nach Anspruch 1, dadurch gekennzeichnet, daß die in den Ein- und Auslaufbereichen der Formstrecke jeweils in die Verzahnungen der Zahnstangen der Formhälften eingreifenden, antreibbaren Ritzel mit ihren Stirnseiten oder mit mit den Stirnseiten verbundenen Bordscheiben formschlüssig an die Zahnstangen einfassenden Flanken anliegen und daß die Ritzel mit diese querfördernden Antrieben versehen sind.

3. Vorrichtung nach Anspruch 2, dadurch gekennzeichnet, daß die Bordscheiben einen größeren Durchmesser besitzen als die Ritzel.

4. Vorrichtung nach einem der Ansprüche 1 bis 3, dadurch gekennzeichnet, daß für jede Folge der Formhälften in der Formstrecke je ein Antriebsritzel vorgesehen ist.

5. Vorrichtung nach einem der Ansprüche 1 bis 4, dadurch gekennzeichnet, daß jedes querfördernde Ritzel in einem in Führungen verfahrbaren Schlitten gelagert ist, der mit einem diesen bewegenden Antrieb versehen ist.

6. Vorrichtung nach Anspruch 5, dadurch gekennzeichnet, daß jedes in einem Schlitten gelagerte Ritzel auf einer gestellfest gelagerten, mit einem Antrieb versehenen Vielkeilwelle verschieblich ist.

7. Vorrichtung nach Anspruch 5 oder 6, dadurch gekennzeichnet, daß jeder Schlitten durch eine gestellfest gelagerte und mit einem Antrieb versehene Spindel verfahrbar ist.

8. Vorrichtung nach einem der Ansprüche 1 bis 7, dadurch gekennzeichnet, daß die Formhälften auf ihren Ober- und Unterseiten mit Zahnstangen versehen sind und im Anfangsbereich der Formstrecke sowohl mit den unteren als auch mit den oberen Zahnstangen kämmende Antriebsritzel vorgesehen sind.

9. Vorrichtung nach einem der Ansprüche 1 bis 8, dadurch gekennzeichnet, daß die Formhälften mit schrägen Führungsflächen versehen sind, die im Auslaufbereich der Formstrecke mit entsprechenden schrägen Führungsflächen des Gestells zusammenwirken.

10. Vorrichtung nach einem der Ansprüche 1 bis 9, dadurch gekennzeichnet, daß sich die Formhälften in der Formstrecke über Rollen an seitlichen Führungsprofilen abstützen.

11. Vorrichtung nach einem der Ansprüche 1 bis 10, dadurch gekennzeichnet, daß die Formhälften auf ihren Ober- und Unterseiten mit Rollen oder frei drehbar gelagerten Kugeln versehen sind, die mit oberen und unteren Führungen oder Führungsflächen des Gestells zusammenwirken können.

12. Vorrichtung nach einem der Ansprüche 1 bis 11, dadurch gekennzeichnet, daß die Ritzel jeder der beiden Rücklaufstrecken miteinander in Antriebsverbindung stehen und von einem gemeinsamen Antrieb synchron angetrieben werden.

13. Vorrichtung nach einem der Ansprüche 1 bis 12, dadurch gekennzeichnet, daß im Endbereich der Formstrecke mit den Zahnstangen jeder Folge von Formhälften kämmende Meßritzel angeordnet sind, deren Wellen mit die Stellung der Zähne der Zahnstangen erfassenden Meßeinrichtungen versehen sind.

14. Vorrichtung nach einem der Ansprüche 1 bis 13, dadurch gekennzeichnet, daß der obere Teil des Gestells entsprechend den Dehnungen und Schrumpfungen der Formhälften heb- und absenkbar ist.

15. Vorrichtung nach einem der Ansprüche 1 bis 14, dadurch gekennzeichnet, daß die Rücklaufstrecken anschließend an die Querförderritzel mit Parkstationen für Formhälften versehen sind, die durch eigene Antriebe in die Rücklaufstrecken einführbar sind.

16. Vorrichtung nach einem der Ansprüche 1 bis 15, dadurch gekennzeichnet, daß das Gestell aus zwei in der vertikalen Längsmittelebene geteilten Teilen besteht, die auseinanderfahrbar und in ihrer zusammengeschobenen Stellung verriegelbar sind.

17. Vorrichtung nach einem der Ansprüche 1 bis 16, dadurch gekennzeichnet, daß das Gestell in seiner Längsrichtung auf Führungen verschieblich ist.

## Claims

1. An apparatus for the manufacture of corrugated tubes from thermoplastic material, comprising
a shaping path adjoining the head of an extruder, composed of a guide arranged in a frame structure, along which, in an inlet, mold halves closed together in pairs as annular molds are advanced in close succession, said mold halves being provided on a lower side thereof with racks,
at least one drive pinion arranged on the initial part of the shaping path for meshing with the racks of the pushed-together mold halves, and
an outlet, following the shaping path, at which the mold halves are separated from each other and are transferred to mutually separate return paths, on which they are returned by conveying means to the inlet,
characterized in that
the conveying means of the return paths consist of driven pinions adapted to come into engagement in sequence with the racks of the mold halves, and in that the transverse conveyance of the mold halves between the outlet and the inlet is caused by transversely movably driven pinions.

2. The apparatus as claimed in claim 1, characterized in that the drivable pinions engaging the respective teeth of the racks on the mold halves in the inlet and outlet parts of the shaping path have their end surfaces, or edge disks connected with the end surfaces, in interlocking engagement with flanks which encircle the racks, and in that the pinions are provided with drives transversely conveying the same.

3. The apparatus as claimed in claim 2, characterized in that the edge disks possess a larger diameter than the pinions.

4. The apparatus as claimed in any one of claims 1 through 3, characterized in that for each train of mold halves along the shaping path one respective drive pinion is provided.

5. The apparatus as claimed in any one of claims 1 through 4, characterized in that each transversely conveying pinion is bearinged in a carriage adapted to move in guides and being provided with a drive for moving the same.

6. The apparatus as claimed in claim 5, characterized in that each pinion bearinged in a carriage is adapted to slide on a splined shaft which is bearinged in a manner fixed in relation to the frame structure and is provided with a drive.

7. The apparatus as claimed in claim 5 or in claim 6, characterized in that each carriage is adapted to be moved by a lead screw which is bearinged in a manner fixed in relation to the frame structure and is provided with a drive.

8. The apparatus as claimed in any one of claims 1 through 7, characterized in that the mold halves are provided on upper and lower sides thereof with racks, and in the initial part of the shaping path drive pinions are provided for meshing both with the lower and also with the upper racks.

9. The apparatus as claimed in any one of claims 1 through 8, characterized in that the mold halves are provided with oblique guide surfaces which in the exit part of the shaping path cooperate with corresponding oblique guide surfaces of the frame structure.

10. The apparatus as claimed in any one of claims 1 through 9, characterized in that along the shaping path the mold halves are supported by means of rollers running on lateral guide sections.

11. The apparatus as claimed in any one of claims 1 through 10, characterized in that on upper and lower sides thereof the mold halves are provided with rollers or freely rotatably supported balls adapted to cooperate with upper and lower guides or guide surfaces on the frame structure.

12. The apparatus as claimed in any one of claims 1 through 11, characterized in that the pinions of each of the two return paths are drivingly connected with each other and are adapted to be driven synchronously by a common drive.

13. The apparatus as claimed in any one of claims 1 through 12, characterized in that in an end part of the shaping path detector pinions are arranged adapted to mesh with the racks of each train of mold halves, shafts of such detector pinions being provided with measuring means detecting the position of the teeth of the racks.

14. The apparatus as claimed in any one of claims 1 through 13, characterized in that the upper part of the frame structure is adapted to be raised and lowered in accordance with the expansion and contraction of the mold halves.

15. The apparatus as claimed in any one of claims 1 through 14, characterized in that following the transverse conveying pinions the return paths are provided with parking stations for mold halves, which are able to be introduced into the return paths by their own drives.

16. The apparatus as claimed in any one of claims 1 through 15, characterized in that the frame structure consists of two parts which are divided in a vertical longitudinal median plane and are able to be drawn apart and locked together in a pushed together setting thereof.

17. The apparatus as claimed in any one of claims 1 through 16, characterized in that the frame structure is adapted to slide along guides in its longitudinal direction.

## Revendications

1. Dispositif de fabrication de tubes ondulés en matière thermoplastique,
avec un trajet de moulage, raccordé à une tête d'injection d'une extrudeuse et constitue d'un guidage, disposé dans un bâti et sur lequel dos demi-moules, fermés par paires pour donner des moules à forme annulaire, sont déplacés vers l'avant en se suivant de près, dons un élément d'introduction, les demi-moules étant pourvus de crémaillères sur leur face inférieure,
avec au moins un pignon d'entraînement disposé dans la zone initiale du chemin de moulage et s'engrenant avec les crémaillères des demi-moules rassemblés, et
avec une évacuation faisant suite au chemin de moulage, dans laquelle les demi-moules sont transférés, séparément l'un de l'autre, sur des chemins de retour séparés les uns des autres, sur lesquels ils sont ramenés à l'élément d'introduction à l'aide de moyens de transport,
caractérisé en ce que,
les moyens de transport des chemins de retour sont constitués de pignons entraînés, s'engrenant successivement avec les crémaillères des demi-moules, et en ce que le transport transversal des demi-moules, entre l'entrée et la sortie, s'effectue au moyen de pignons entraînés et ayant une mobilité transversale.

2. Dispositif selon la revendication 1, caractérisé en ce que les pignons susceptibles d'être entraînés et s'engrenant respectivement dans les dentures des crémaillères des demi-moules, dans les zones d'introduction et d'évacuation du chemin de moulage, appuient, par leurs faces frontales ou par des disques de bordure reliés aux faces frontales, par concordance des formes, sur des flancs enchâssant les crémaillères, et en ce que les pignons sont pourvus de ces entraînements à transport transversal.

3. Dispositif selon la revendication 2, caractérisé en ce que les disques de bordure ont un diamètre supérieur à celui des pignons.

4. Dispositif selon l'une des revendications 1 à 3, caractérisé en ce qu'un pignon d'entraînement est prévu pour chaque succession de demi-moules dans le chemin de moulage.

5. Dispositif selon l'une des revendications 1 à 4, caractérise en ce que chaque pignon à transport transversal est monté en rotation dans un chariot déplaçable dans les guidages et pourvu d'un entraînement déplaçant celui-ci.

6. Dispositif selon la revendication 5, caractérisé en ce que chaque pignon monté en rotation dans un chariot est déplaçable sur un arbre à cales multiples pourvu d'un entraînement.

7. Dispositif selon la revendication 5 ou 6, caractérisé en ce que chaque chariot est déplaçable au moyen d'une broche, montée de façon fixe sur le bâti et pourvu d'un entraînement.

8. Dispositif selon l'une des revendications 1 à 7, caractérisé en ce que les demi-moules sont pourvus, sur leurs faces supérieures et inférieures, de crémaillères et dans la zone initiale du chemin de moulage étant prévus des pignons d'entraînement s'engrenant, tant avec les crémaillères inférieures qu'également avec les crémaillères supérieures.

9. Dispositif selon l'une des revendications 1 à 8, caractérisé en ce que les demi-moules sont pourvus de surfaces de guidage obliques qui coopèrent dans la zone de sortie du chemin de moulage avec des surfaces de guidage obliques correspondantes du bâti.

10. Dispositif selon l'une des revendications 1 à 9 caractérisé en ce que les demi-moules prennent appui dans le chemin de guidage sur des profilés de guidage latéraux, par l'intermédiaire de galets.

11. Dispositif selon l'une des revendications 1 à 10, caractérisé en ce que les demi-moules sont pourvus sur leurs faces supérieures et inférieures de galets ou bien de billes montées de façon à pouvoir tourner librement et coopérant avec des guidages ou des surfaces de guidage, supérieures et inférieures, du bâti.

12. Dispositif selon l'une des revendications 1 à 11 caractérisé en ce que les pignons de chacun des deux chemins de retour sont reliés ensemble en entraînement et sont entraînés de façon synchrone par un entraînement commun.

13. Dispositif selon l'une des revendications 1 à 12, caractérisé en ce que, dans la zone d'extrémité du chemin de moulage, sont disposés des pignons de mesure d'engrenant avec les crémaillères de chaque succession de demi-moules, dont les arbres sont pourvus de dispositifs de mesure appréhendant la position des dents des crémaillères.

14. Dispositif selon lune des revendications 1 à 13, caractérisé en ce que la partie supérieure du bâti peut être levée ou abaissée de manière correspondante aux dilatations et aux rétractions des demi-moules.

15. Dispositif selon l'une des revendications 1 à 14, caractérisé en ce que les chemins de retour sont pourvus, à la suite des pignons à transfert transversal, de postes de stationnement destinés aux demi-moules et pouvant être introduits au moyen d'entraînements propres, dans les chemins de retour.

16. Dispositif selon l'une des revendications 1 à 15, caractérisé en ce que le bâti est constitué de deux parties, divisées dans le plan longitudinal vertical et pouvant être écartées l'une de l'autre et verrouillables dans leur position regroupée.

17. Dispositif selon l'une des revendications 1 à 14, caractérisé en ce que le bâti est déplaçable dans sa direction longitudinale, sur des galets.
